# EUROPEAN PATENT APPLICATION

(11) **EP 4 287 119 A1**
(43) Date of publication of application: **06.12.2023**
(21) Application number: 22193065.4
(22) Date of filing: 31.08.2022
(51) Int. Cl.: G06T 7/33, G06F 18/25

(54) **METHOD AND APPARATUS FOR SENSING OBJECT, VEHICLE, ELECTRONIC DEVICE AND STORAGE MEDIUM**

(30) Priority: 31.05.2022 CN 202210613239
(71) Applicant: Xiaomi EV Technology Co., Ltd., 100176 Beijing (CN)
(72) Inventor: DUAN, Zhixiang, Beijing, 100176 (CN); GAN, Peng, Beijing, 100176 (CN); OU, Yuanchang, Beijing, 100176 (CN)
(74) Representative: Zimmermann, Tankred Klaus

(57) **Abstract**

The present invention provides an object sensing method and apparatus, a vehicle, an electronic device, and a computer-readable storage medium, and relates to an autopilot technology. The present method includes: collecting (S 101) image data and point cloud data of the object, and acquiring an image feature of the image data and a point cloud feature of the point cloud data; generating (S102) a fusion feature by performing feature fusion on the image feature and the point cloud feature; and generating (S 103) a sensing result of the object according to the fusion feature.

## Description

### FIELD

The present invention relates to an autopilot technology, and more particularly to an object sensing method and apparatus, a vehicle, an electronic device and a storage medium.

### BACKGROUND

At present, object sensing has been widely used in applications such as object detection and classification prediction. For example, in an autonomous driving scenario, pedestrians and vehicles on the road can be identified through object sensing. Another example is a monitoring scenario, in which movements and faces of people within the monitoring range can be identified through object sensing. However, object sensing in the related art has problems of poor robustness and poor accuracy.

### SUMMARY

The present invention provides an object sensing method and apparatus, a vehicle, an electronic device, a computer-readable storage medium, and a computer program product, to solve at least one of the problems of poor robustness and poor accuracy in the existing object sensing.

In a first aspect of embodiments of the present invention, a method for sensing an object includes: collecting image data and point cloud data of the object, and acquiring an image feature of the image data and a point cloud feature of the point cloud data; generating a fusion feature by performing feature fusion on the image feature and the point cloud feature; and generating a sensing result of the object according to the fusion feature.

Optionally, generating the fusion feature by performing the feature fusion on the image feature and the point cloud feature includes: generating a point cloud mapping feature of the point cloud feature in a feature space where the image feature is present by performing feature mapping on the point cloud feature; and generating the fusion feature by performing the feature fusion on the image feature and the point cloud mapping feature.

Optionally, generating the fusion feature by performing the feature fusion on the image feature and the point cloud feature includes: generating an image mapping feature of the image feature in a feature space where the point cloud feature is present by performing feature mapping on the image feature; and generating the fusion feature by performing the feature fusion on the image mapping feature and the point cloud feature.

Optionally, generating a mapping feature including the point cloud mapping feature and the image mapping feature by performing the feature mapping on one of the point cloud feature and the image feature includes: acquiring a neural field network corresponding to one of the point cloud feature and the image feature; and inputting the one of the point cloud feature and the image feature into the neural field network, and outputting the mapping feature by the neural field network.

Optionally, generating a mapping feature including the point cloud mapping feature and the image mapping feature by performing the feature mapping on one of the point cloud feature and the image feature includes: acquiring a sampling point set corresponding to one of the point cloud feature and the image feature, and dividing the sampling point set into a plurality of sampling point subsets; performing the feature mapping on the one of the point cloud feature and the image feature corresponding to each sampling point in the plurality of sampling point subsets, and generating a local mapping feature corresponding to each sampling point subset; and generating a global mapping feature corresponding to the sampling point set by performing feature aggregation on the local mapping features corresponding to the plurality of the sampling point subsets.

Optionally, dividing the sampling point set into the plurality of the sampling point subsets includes: determining a plurality of center points from the sampling points in the sampling point set; acquiring a region formed by taking one of the plurality of center points as a center of the region and spreading out from the center of the region; and constructing one sampling point subset based on all sampling points in a respective region.

Optionally, generating the fusion feature by performing the feature fusion on the image feature and the point cloud feature includes: generating a sampling point pair by pairing the first sampling point and the second sampling point based on a position of a first sampling point corresponding to the image feature and a position of a second sampling point corresponding to the point cloud feature, wherein the sampling point pair includes a first target sampling point and a second target sampling point; and generating the fusion feature by performing the feature fusion on the image feature corresponding to the first target sampling point and the point cloud feature corresponding to the second target sampling point.

Optionally, generating the sampling point pair by pairing the first sampling point and the second sampling point based on the position of the first sampling point corresponding to the image feature and the position of the second sampling point corresponding to the point cloud feature includes: acquiring, based on a position of a first candidate sampling point, a first transformation position of the first candidate sampling point in a coordinate system where the second sampling point is present; selecting, based on positions of second sampling points and the first transformation position, a second candidate sampling point from the second sampling points, wherein a position of the second candidate sampling point is the same as the first transformation position; and generating the sampling point pair by pairing the first candidate sampling point and the second candidate sampling point.

Optionally, generating the sampling point pair by pairing the first sampling point and the second sampling point based on the position of the first sampling point corresponding to the image feature and the position of the second sampling point corresponding to the point cloud feature includes: acquiring, based on a position of a second candidate sampling point, a second transformation position of the second candidate sampling point in a coordinate system where the first sampling point is present; selecting, based on positions of first sampling points and the second transformation position, a first candidate sampling point from the first sampling points, wherein a position of the first candidate sampling point is the same as the second transformation position; and generating the sampling point pair by pairing the first candidate sampling point and the second candidate sampling point.

In a second aspect of embodiments of the present invention, an apparatus for sensing an object includes: a collecting module configured to collect image data and point cloud data of the object and acquire an image feature of the image data and a point cloud feature of the point cloud data; a fusing module configured to generate a fusion feature by performing feature fusion on the image feature and the point cloud feature; and a sensing module configured to generate a sensing result of the object according to the fusion feature.

Optionally, the fusing module is further configured to: generate a point cloud mapping feature of the point cloud feature in a feature space where the image feature is present by performing feature mapping on the point cloud feature; and generate the fusion feature by performing the feature fusion on the image feature and the point cloud mapping feature.

Optionally, the fusing module is further configured to: generate an image mapping feature of the image feature in a feature space where the point cloud feature is present by performing feature mapping on the image feature; and generate the fusion feature by performing the feature fusion on the image mapping feature and the point cloud feature.

Optionally, the fusing module is further configured to: acquire a neural field network corresponding to one of the point cloud feature and the image feature; and input the one of the point cloud feature and the image feature into the neural field network, and output the mapping feature by the neural field network.

Optionally, the fusing module is further configured to: acquire a sampling point set corresponding to one of the point cloud feature and the image feature, and divide the sampling point set into a plurality of sampling point subsets; perform the feature mapping on the one of the point cloud feature and the image feature corresponding to each sampling point in the plurality of sampling point subsets, and generate a local mapping feature corresponding to each sampling point subset; and generate a global mapping feature corresponding to the sampling point set by performing feature aggregation on the local mapping features corresponding to the plurality of the sampling point subsets.

Optionally, the fusing module is further configured to: determine a plurality of center points from the sampling points in the sampling point set; acquire a region formed by taking one of the plurality of center points as a center of the region and spreading out from the center of the region; and construct one sampling point subset based on all sampling points in a respective region.

Optionally, the fusing module is further configured to: generate a sampling point pair by pairing the first sampling point and the second sampling point based on a position of a first sampling point corresponding to the image feature and a position of a second sampling point corresponding to the point cloud feature, in which the sampling point pair includes a first target sampling point and a second target sampling point; and generate the fusion feature by performing the feature fusion on the image feature corresponding to the first target sampling point and the point cloud feature corresponding to the second target sampling point.

Optionally, the fusing module is further configured to: acquire, based on a position of a first candidate sampling point, a first transformation position of the first candidate sampling point in a coordinate system where the second sampling point is present; select, based on positions of second sampling points and the first transformation position, a second candidate sampling point from the second sampling points, in which a position of the second candidate sampling point is the same as the first transformation position; and generate the sampling point pair by pairing the first candidate sampling point and the second candidate sampling point.

Optionally, the fusing module is further configured to: acquire, based on a position of a second candidate sampling point, a second transformation position of the second candidate sampling point in a coordinate system where the first sampling point is present; select, based on positions of first sampling points and the second transformation position, a first candidate sampling point from the first sampling points, in which a position of the first candidate sampling point is the same as the second transformation position; and generate the sampling point pair by pairing the first candidate sampling point and the second candidate sampling point.

In a third aspect of embodiments of the present invention, a vehicle includes the apparatus for sensing the object as described in accordance with embodiments of the second aspect.

In a fourth aspect of embodiments of the present invention, an electronic device includes a processor; and a memory having stored therein instructions executable by the processor. The processor is configured to execute the instructions for implementing the method for sensing the object as described in accordance with embodiments of the first aspect.

In a fifth aspect of embodiments of the present invention, a computer-readable storage medium has stored therein instructions that, when executed by a processor of an electronic device, cause the electronic device to implement the method for sensing the object as described in accordance with embodiments of the first aspect.

In a sixth aspect of embodiments of the present invention, a computer program product includes a computer program. When the computer program is operated by a processor of an electronic device, the processor of the electronic device implements the method for sensing the object as described in accordance with embodiments of the first aspect.

The technical solutions provided by embodiments of the present invention bring at least the following beneficial effects: the fusion feature is generated by fusing the image feature with the point cloud feature, and the sensing result of the object can be generated according to the fusion feature. Therefore, the generation of the sensing result of the object is based on the fusion feature obtained through the feature fusion of the image feature and the point cloud feature, and in this way the object is sensed by the comprehensive consideration of both the image feature and the point cloud feature, thus improving the robustness and the accuracy of the object sensing.

It should be understood that the general description and the following detailed description are only explanatory and shall not be construed to limit the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention and shall not be construed to limit the present invention.
FIG. 1 is a flow chart of a method for sensing an object according to an embodiment of the present invention.
FIG. 2 is a flow chart of a mapping feature generation of a method for sensing an object according to an embodiment of the present invention.
FIG. 3 is a flow chart of a mapping feature generation of a method for sensing an object according to another embodiment of the present invention.
FIG. 4 is a flow chart of a fusion feature generation of a method for sensing an object according to an embodiment of the present invention.
FIG. 5 is a schematic diagram illustrating a method for sensing an object according to an embodiment of the present invention.
FIG. 6 is a block diagram illustrating an apparatus for sensing an object according to an embodiment of the present invention.
FIG. 7 is a block diagram illustrating a vehicle according to an embodiment of the present invention.
FIG. 8 is a block diagram illustrating an electronic device according to an embodiment of the present invention.

### DETAILED DESCRIPTION

In order to make those skilled in the art better understand the technical solutions of the present invention, the technical solutions in accordance with embodiments of the present invention will be clearly and completely described below with reference to the accompanying drawings.

It should be noted that terms such as "first" and "second" are used herein for purposes of distinguishing similar objects and are not intended to indicate or imply relative importance or significance or a specific order or sequence of the elements. It is to be understood that the terms so used may be interchanged with each other under appropriate circumstances to allow embodiments of the present invention described herein to be implemented in sequences other than those illustrated or described herein. The illustrative embodiments below are not intended to represent all implementations consistent with the present invention. They are only examples of apparatus and methods according to some aspects of the present invention as recited in the appended claims.

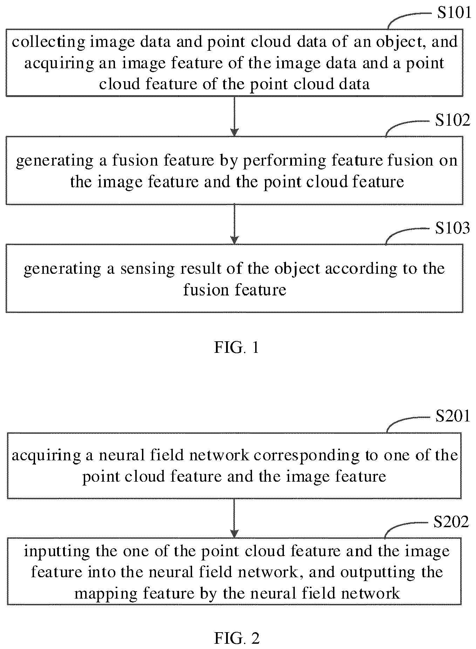

FIG. 1 is a flow chart of a method for sensing an object according to an embodiment of the present invention. As shown in FIG. 1, the method for sensing the object includes the following operations.

In S101, image data and point cloud data of the object are collected, and an image feature of the image data and a point cloud feature of the point cloud data are acquired.

It should be noted that a subject that performs the object sensing method in accordance with embodiments of the present invention is an electronic device. The electronic device includes a mobile phone, a notebook, a desktop computer, a vehicle-mounted terminal, a smart home appliance, and the like. The method for sensing the object in accordance with embodiments of the present invention may be executed by an apparatus for sensing an object of the present invention. In accordance with embodiments of the present invention, the apparatus for sensing the object may be configured in any electronic device to execute the method for sensing the object as described in accordance with embodiments of the present invention.

It should be noted that the object, the image data, and the point cloud data are not particularly specified herein. For example, the object includes, but is not limited to, pedestrians, vehicles, roads, lane lines, buildings, etc., the image data includes, but is not limited to, two-dimensional image data, three-dimensional image data, etc., and the point cloud data includes, but is not limited to, position, color, depth, gray value, etc., where the position may include a three-dimensional coordinate, and the color includes, but is not limited to, red, green and blue pixels.

In an embodiment, collecting the image data of the object may include collecting the image data of the object through a camera, like an optical camera. It should be noted that the camera is not limited to a certain device. For example, the camera includes, but is not limited to, a two-dimensional camera, a three-dimensional camera, and the like.

In an embodiment, collecting the point cloud data of the object may include collecting the point cloud data of the object through a three-dimensional scanning device. It should be noted that the three-dimensional scanning device is not limited to a certain device. For example, the three-dimensional scanning device includes, but is not limited to, a lidar device, a millimeter-wave radar, and a depth camera.

In an embodiment, in the case where the execution subject is the vehicle-mounted terminal, image(s) of the surrounding environment of the vehicle can be collected by a camera disposed on the vehicle, and the point cloud data of the surrounding environment of the vehicle can be collected by the lidar device disposed on the vehicle.

It should be noted that the image feature and point cloud feature are not limited to certain features. For example, the image feature and the point cloud feature can be represented by vectors with various dimensions. For example, the image feature and the point cloud feature can both be represented by a 64-dimensional vector.

In an embodiment, acquiring the image feature of the image data may include extracting a candidate feature from the image data and performing a dimensionality increase on the candidate feature to acquire the image feature. It should be noted that the dimensionality increase is not limited to a certain process. For example, the dimensionality increase process includes, but is not limited to, an interactive feature, a polynomial feature, and the like. It should be noted that, regarding the contents of acquiring the point cloud feature of the point cloud data, reference is made to the above-mentioned embodiments, and the details are not elaborated here.

In an embodiment, acquiring the point cloud feature of the point cloud data may include generating the point cloud feature by encoding the point cloud data. It should be noted that the encoding manner is not limited to a certain manner. For example, the encoding manner may include a stacked voxel feature encoding (VFE).

In S102, a fusion feature is generated by performing feature fusion on the image feature and the point cloud feature.

In an embodiment, generating the fusion feature by performing the feature fusion on the image feature and the point cloud feature may include generating the fusion feature by splicing the image feature and the point cloud feature. For example, the image feature and the point cloud feature are both 64-dimensional vectors, and the image feature and point cloud feature can be spliced in the order of the image feature and the point cloud feature, and the fusion feature is a 128-dimensional vector.

In an embodiment, the image feature and the point cloud feature are both n-dimensional vectors, where n is a positive integer. In the case that the fusion feature is generated by feature-fusing the image feature with the point cloud feature, it may include generating an i^{th} dimensional fusion feature by performing feature fusion on an i^{th} dimensional image feature and an i^{th} dimensional point cloud feature, where 1≤i≤n, and i is a positive integer. It can be understood that the fusion feature is an n-dimensional vector.

In an embodiment, the operation of generating the i^{th} dimensional fusion feature by performing feature fusion on the i^{th} dimensional image feature and the i^{th} dimensional point cloud feature may include acquiring a sum of the i^{th} dimensional image feature and the i^{th} dimensional point cloud feature as the i^{th} dimensional fusion feature.

In S103, a sensing result of the object is generated according to the fusion feature.

It should be noted that the sensing result is not limited to a certain result. For example, the sensing result includes, but is not limited to, a target detection result, a classification prediction result, an action recognition result, and a face recognition result. The target detection result may include an object detection frame. The classification prediction result includes, but is not limited to, a category of the object, a predicted probability for each category, etc. The action recognition result includes, but is not limited to, an action of the object, a predicted probability for each action, etc. The face recognition result includes, but is not limited to, a face detection frame, a face width, a face height, etc.

In an embodiment, the operation of generating the sensing result of the object according to the fusion feature may include inputting the fusion feature into a target detection network, and outputting a target detection result of the object by the target detection network.

With the method for sensing the object in accordance with embodiments of the present invention, the fusion feature is generated by fusing the image feature with the point cloud feature, and the sensing result of the object can be generated according to the fusion feature. Therefore, the generation of the sensing result of the object is based on the fusion feature obtained through the feature fusion of the image feature and the point cloud feature, and in this way the object is sensed by the comprehensive consideration of both the image feature and the point cloud feature, thus improving the robustness and the accuracy of the object sensing.

In accordance with embodiments, the operation in block S102 of generating the fusion feature by performing feature fusion on the image feature and the point cloud feature may include the following two possible implementations.

In a first implementation, a point cloud mapping feature of the point cloud feature in a feature space where the image feature is present is generated by performing feature mapping on the point cloud feature, and the fusion feature is generated by performing the feature fusion on the image feature and the point cloud mapping feature to.

It can be understood that a feature space where the point cloud feature(s) is present may be different from a feature space where the image feature(s) is present. The feature mapping can be performed on the point cloud feature to generate the point cloud mapping feature in the feature space where the image feature is present, that is, a feature space where the point cloud mapping feature is present is the same as the feature space where the image feature is present. The feature fusion can be performed on the image feature and the point cloud mapping feature to generate the fusion feature. It should be noted that, regarding the contents of generating the fusion feature by performing the feature fusion on the image feature and the point cloud mapping feature, reference is made to the above-mentioned embodiments, which will not be elaborated here.

In an embodiment, the operation of generate the point cloud mapping feature of the point cloud feature in the feature space where the image feature is present by performing the feature mapping on the point cloud feature may include: acquiring a feature mapping matrix, and generating the point cloud mapping feature by performing the feature mapping on the point cloud feature according to the feature mapping matrix. It should be noted that the feature mapping matrix is not limited to a certain matrix, and the feature mapping matrix can be preset. The feature mapping matrix can be generated according to the feature space where the point cloud feature is present and the feature space where the image feature is present.

In an embodiment, in a case where the point cloud feature has a higher dimensionality than the image feature, the operation of generating the point cloud mapping feature of the point cloud feature in the feature space where the image feature is present by performing the feature mapping on the point cloud feature may include generating the point cloud mapping feature by performing a dimensionality reduction on the point cloud feature. It should be noted that a process of the dimensionality reduction is not limited to a certain process. For example, the dimensionality reduction process includes, but is not limited to, a principal component analysis (PCA), a Laplace feature mapping, and the like.

In an embodiment, in a case where the point cloud feature has a lower dimensionality than the image feature, the operation of generating the point cloud mapping feature of the point cloud feature in the feature space where the image feature is present by performing the feature mapping on the point cloud feature may include generating the point cloud mapping feature by performing a dimensionality increase on the point cloud feature. It should be noted that, regarding the contents of the dimensionality increase, reference is made to the above-mentioned embodiments, which will not be elaborated here.

In the present method, the feature mapping can be performed on the point cloud feature to generate the point cloud mapping feature of the point cloud feature in the feature space where the image feature is present, and the fusion feature is generated by performing the feature fusion on the image feature and the point cloud mapping feature.

In a second implementation, an image mapping feature of the image feature in a feature space where the point cloud feature is present is generated by performing feature mapping on the image feature, and the fusion feature is generated by performing the feature fusion on the image mapping feature and the point cloud feature.

It can be understood that a feature space where the point cloud feature(s) is present may be different from a feature space where the image feature(s) is present. The feature mapping can be performed on the image feature to generate the image mapping feature in the feature space where the point cloud feature is present, that is, a feature space where the image mapping feature is present is the same as the feature space where the point cloud feature is present. The feature fusion can be performed on the image mapping feature and the point cloud feature to generate the fusion feature. It should be noted that, regarding the contents of generating the fusion feature by performing the feature fusion on the image mapping feature and the point cloud feature, reference is made to the above-mentioned embodiments, which will not be elaborated here.

It should be noted that, regarding the contents of generating the image mapping feature by performing the feature mapping on the image feature, reference is made to the above-mentioned embodiments, which will not be elaborated here.

In the present method, the feature mapping can be performed on the image feature to generate the image mapping feature of the image feature in the feature space where the point cloud feature is present, and the feature fusion is performed on the image mapping feature and the point cloud feature to generate the fusion feature.

In accordance with embodiments, as shown in FIG. 2, the operation of generating the mapping feature including the point cloud mapping feature and the image mapping feature by performing the feature mapping on one of the point cloud feature and the image feature may include the following operations.

In S201, a neural field network corresponding to one of the point cloud feature and the image feature is acquired.

In accordance with embodiments of the present invention, the neural field network corresponding to any of the point cloud feature and the image feature can be acquired. It can be understood that a neural field network corresponding to the point cloud feature may be different from a neural field network corresponding to the image feature.

It should be noted that the neural field network is constructed according to a neural network. For example, the neural field network may be a multilayer perceptron (MLP).

In an embodiment, a training process of the neural field network e.g., corresponding to the point cloud feature, may include: acquiring a training sample, in which the training sample includes a sample point cloud feature and a sample point cloud mapping feature; inputting the sample point cloud feature into the neural field network; outputting a predicted point cloud mapping feature by the neural field network; training the neural field network according to the predicted point cloud mapping feature and the sample point cloud mapping feature; in response to a preset end condition not being met, returning to the beginning and training the neural field network with a next training sample until the preset end condition is met. It should be noted that the preset end condition is not limited to a certain condition. For example, the preset end condition includes, but is not limited to, that a network precision reaches a preset precision threshold, the number of iterations reaches a preset number, and the like.

It should be noted that, regarding a training process for the neural field network corresponding to the image feature, reference is made to the above-mentioned embodiment, and the details are not elaborated here.

In S202, the one of the point cloud feature and the image feature is input into the neural field network, and the mapping feature is output by the neural field network.

In an embodiment, the point cloud feature is input into the neural field network, and the point cloud mapping feature is output by the neural field network.

In an embodiment, the image feature is input into the neural field network, and the image mapping feature is output by the neural field network.

In the present method, one of the point cloud feature and the image feature can be input into the neural field network, and the mapping feature can be output by the neural field network, to realize the feature mapping of one of the point cloud feature and the image feature.

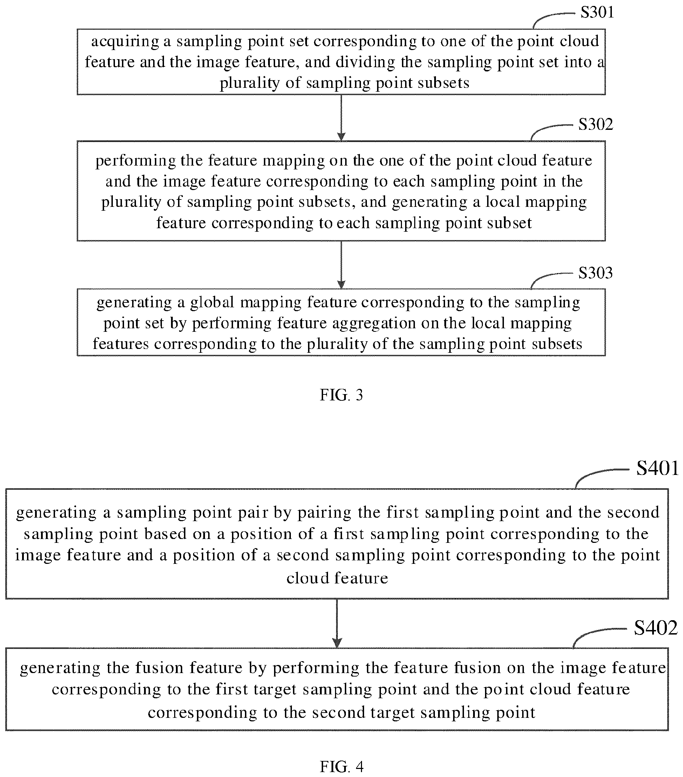

In accordance with embodiments, as shown in FIG. 3, the operation of generating the mapping feature including the point cloud mapping feature and the image mapping feature by performing the feature mapping on one of the point cloud feature and the image feature may include the following operations.

In S301, a sampling point set corresponding to one of the point cloud feature and the image feature is acquired, and the sampling point set is divided into a plurality of sampling point subsets.

It can be understood that the sampling point set and the sampling point subset include a plurality of sampling points. It should be noted that the number of the sampling point subsets is not limited to a certain number. For example, the number of the sampling point subsets may be 10. Two sampling point subsets may or may not have overlapped sampling points.

In an embodiment, the operation of dividing the sampling point set into a plurality of the sampling point subsets may include: generating the sampling point subsets by dividing the sampling point set according to a preset number of sampling points in the sampling point subset. It can be understood that each sampling point subset includes the preset number of the sampling points.

In an embodiment, the operation of dividing the sampling point set into a plurality of the sampling point subsets may include: determining a plurality of center points from the sampling points in the sampling point set; acquiring a region formed by taking one of the plurality of center points as a center of the region and spreading out from the center of the region; and constructing one sampling point subset based on all sampling points in a respective region. It can be understood that one center point corresponds to one sampling point subset. Every sampling point in the sampling point set is present on a sampling surface. With the center point as the center, the region formed by spreading out from the center point is also present on the sampling surface. It should be noted that the sampling surface and the region are not limited to a certain surface/region. For example, the sampling surface includes, but is not limited to, a plane, a curved surface, etc., and the region includes, but is not limited to, a circle, a rectangle, etc.

In an embodiment, a distance between any two adjacent center points is a preset distance, that is, the center points are distributed at equal intervals. It should be noted that the preset distance is not limited to a certain distance.

In an embodiment, the operation of acquiring a region formed by taking one of the plurality of center points as a center of the region and spreading out from the center of the region may include acquiring the region formed by taking one of the plurality of center points as a center of the region and spreading out from the center of the region with a preset area. It should be noted that the preset area is not limited to a certain area.

In S302, the feature mapping is performed on the one of the point cloud feature and the image feature corresponding to each sampling point in the plurality of sampling point subsets, and a local mapping feature corresponding to each sampling point subset is generated.

In an embodiment, the sampling point subset includes n sampling points where n is a positive integer, and the local mapping feature corresponding to the sampling point subset is generated by performing the feature mapping on any feature corresponding to each sampling point in the sampling point subset. Such an operation may include: generating a mapping feature corresponding to an i^{th} sampling point by performing the feature mapping on a feature (a point cloud feature or an image feature) corresponding to the i^{th} sampling point in the subset where i is a positive integer, and 1≤i≤n; and generating the local map corresponding to each sampling point subset according to the mapping features corresponding to the sampling points in each sampling point subset.

In an embodiment, the operation of generating the local mapping feature corresponding to each sampling point subset according to the mapping features corresponding to the sampling points in each sampling point subset may include: generating the local mapping feature corresponding to the sampling point subset by performing feature aggregation on the mapping features corresponding to all sampling points in the sampling point subset. It should be noted that the feature aggregation is not limited to a certain aggregation. For example, the feature aggregation includes, but is not limited to, summation, splicing, encoding, etc., and regarding details thereof reference is made to the above-mentioned embodiments, and the details will not be elaborated here.

In an embodiment, the operation of performing the feature mapping on the one of the point cloud feature and the image feature corresponding to each sampling point in the sampling point subset, and generating the local mapping feature corresponding to each sampling point subset may include: inputting the one of the point cloud feature and the image feature corresponding to each sampling point in the sampling point subset into a local neural field network; and outputting the local mapping feature corresponding to the sampling point subset by the local neural field network. It should be noted that, regarding details of the local neural field network reference is made to the above-mentioned embodiments, and the details will not be elaborated here.

In an embodiment, the operation of performing the feature mapping on the one of the point cloud feature and the image feature corresponding to each sampling point in the sampling point subset, and generating the local mapping feature corresponding to each sampling point subset may include: performing the feature mapping on the point cloud feature corresponding to each sampling point in the sampling point subset, and generating a local point cloud mapping feature corresponding to the sampling point subset.

In an embodiment, the operation of performing the feature mapping on the one of the point cloud feature and the image feature corresponding to each sampling point in the sampling point subset, and generating the local mapping feature corresponding to each sampling point subset may include: performing the feature mapping on the image feature corresponding to each sampling point in the sampling point subset, and generating a local image mapping feature corresponding to the sampling point subset.

In S303, a global mapping feature corresponding to the sampling point set is generated by performing feature aggregation on the local mapping features corresponding to the plurality of the sampling point subsets to.

It is noted that, regarding the feature aggregation, reference is made to the above-mentioned embodiments, and the details will not be elaborated here.

For example, a sampling point set D can be divided into sampling point subsets A, B, and C having the corresponding local mapping features x_{A}, x_{B}, and xc, respectively, and the feature aggregation can be performed on features x_{A}, x_{B}, and xc to generate a global mapping feature x_{D} corresponding to the sample point set D.

In the present method, the sampling point set corresponding to one of the point cloud feature and the image feature is divided into a plurality of the sampling point subsets, the feature mapping is performed on the feature (i.e., the one of the point cloud feature and the image feature) corresponding to each sampling point in a plurality of the sampling point subsets to generate the local mapping feature corresponding to the sampling point subset, and the feature aggregation is performed on the local mapping feature corresponding to each sampling point subset to generate the global mapping feature corresponding to the sampling point set.

In accordance with embodiments, as shown in FIG. 4, the operation in S102 of generating the fusion feature by performing the feature fusion on the image feature and the point cloud feature may include the following operations.

In S401, a sampling point pair is generated by pairing the first sampling point and the second sampling point based on a position of a first sampling point corresponding to the image feature and a position of a second sampling point corresponding to the point cloud feature. The sampling point pair includes a first target sampling point and a second target sampling point.

It should be noted that the position is not limited to a certain position. For example, the position of the first sampling point includes, but is not limited to, a two-dimensional coordinate, a row, a column, etc., and the position of the second sampling point may include a three-dimensional coordinate.

In accordance with embodiments of the present invention, the first sampling points and the second sampling points are in one-to-one correspondence. The sampling point pair is generated by pairing first sampling point and the second sampling point according to the position of the first sampling point corresponding to the image feature and the position of the second sampling point corresponding to the point cloud feature, which may be realized in the following two implementations.

In a first implementation, a position of a first candidate sampling point is determined, and a first transformation position of the first candidate sampling point in a coordinate system where the second sampling point is present is acquired; based on positions of second sampling points and the first transformation position, a second candidate sampling point is selected from the second sampling points, in which a position of the second candidate sampling point is the same as the first transformation position; and the sampling point pair is generated by pairing the first candidate sampling point and the second candidate sampling point.

It can be understood that the coordinate system where the first sampling points are present/located may be different from the coordinate system where the second sampling points are present/located.

In an embodiment, the operation of acquiring, based on the position of the first candidate sampling point, the first transformation position of the first candidate sampling point in the coordinate system where the second sampling point is present may include: acquiring a coordinate transformation matrix, and performing coordinate transformation on the position of the first candidate sampling point according to the coordinate transformation matrix to acquire the first transformation position. It should be noted that the coordinate transformation matrix is not limited to a certain matrix. The coordinate transformation matrix can be any preset matrix. For example, in a case where the image feature data is collected by a camera and the point cloud data is collected through a lidar device, the image coordinate transformation matrix may be generated according to positions and postures of the camera and the lidar device.

For example, a first transformation position of a first candidate sampling point A in a coordinate system where the second sampling points are present is (1,0,0), and the second sampling points B, C, and D have positions of (0,0,0), (1,1,1), (1,0,0), respectively. The second candidate sampling point D can be selected from the second sampling points B, C, and D since the position of the second candidate sampling point D is the same as the first transformation position. The first candidate sampling point A and the second candidate sampling point D are paired to generate the sampling point pair.

In the present method, the coordinate transformation is performed on the first candidate sampling point to generate the first transformation position of the first candidate sampling point in the coordinate system where the second sampling points are present, the second candidate sampling point is selected from the second sampling points according to the positions of the second sampling points and the first transformation position, and the first candidate sampling point and the second candidate sampling point are paired to generate the sampling point pair.

In a second implementation, a position of a second candidate sampling point is determined, and a second transformation position of the second candidate sampling point in a coordinate system where the first sampling points are present is acquired; based on positions of the first sampling points and the second transformation position, a first candidate sampling point is selected from the second sampling points, in which a position of the first candidate sampling point is the same as the second transformation position; and the sampling point pair is generated by pairing the first candidate sampling point and the second candidate sampling point.

It can be understood that, regarding the contents of acquiring the second transformation position based on the second candidate sampling point, reference is made the above-mentioned embodiments, and the details will not be elaborated here.

For example, a second transformation position of a second candidate sampling point A in a coordinate system where the first sampling points are present is (1,0), and the first sampling points B, C, and D have positions of (0,0), (1,1), (1,0), respectively. The first candidate sampling point D can be selected from the first sampling points B, C, and D since the position of the first candidate sampling point D is the same as the second transformation position. The first candidate sampling point D and the second candidate sampling point A are paired to generate the sampling point pair.

In the present method, the coordinate transformation is performed on the second candidate sampling point to generate the second transformation position of the second candidate sampling point in the coordinate system where the first sampling points are present, the first candidate sampling point is selected from the first sampling points according to the positions of the first sampling points and the second transformation position, and the first candidate sampling point and the second candidate sampling point are paired to generate the sampling point pair.

In S402, the fusion feature is generated by performing the feature fusion on the image feature corresponding to the first target sampling point and the point cloud feature corresponding to the second target sampling point.

In an embodiment, the operation of generating the fusion feature by performing the feature fusion on the image feature corresponding to the first target sampling point and the point cloud feature corresponding to the second target sampling point may include: generating a point cloud mapping feature of the point cloud feature corresponding to the second target sampling point in a feature space where the image feature is present by performing feature mapping on the point cloud feature corresponding to the second target sampling point; generating the fusion feature by performing the feature fusion on the image feature corresponding to the first target sampling point and the point cloud mapping feature corresponding to the second target sampling point. It should be noted that, regarding the contents of the feature mapping, reference is made to the above-mentioned embodiments, and the details will not be elaborated here.

In an embodiment, the operation of generating the fusion feature by performing the feature fusion on the image feature corresponding to the first target sampling point and the point cloud feature corresponding to the second target sampling point may include: generating an image mapping feature of the image feature corresponding to the first target sampling point in a feature space where the point cloud feature is present by performing feature mapping on the image feature corresponding to the first target sampling point; generating the fusion feature by performing the feature fusion on the image mapping feature corresponding to the first target sampling point and the point cloud feature corresponding to the second target sampling point.

It should be noted that, regarding the contents of the feature fusion of the image feature corresponding to the first target sampling point and the point cloud feature corresponding to the second target sampling point for the generation of the fusion features, reference is made to the above-mentioned embodiments, and the details will not be elaborated here.

In the present method, based on the position of the first sampling point and the position of the second sampling point, the sampling point pair can be generated by pairing the first sampling point and the second sampling point. Further, the fusion feature is generated by feature-fusing the image feature corresponding to the first target sampling point and the point cloud feature corresponding to the second target sampling point in the sampling point pair.

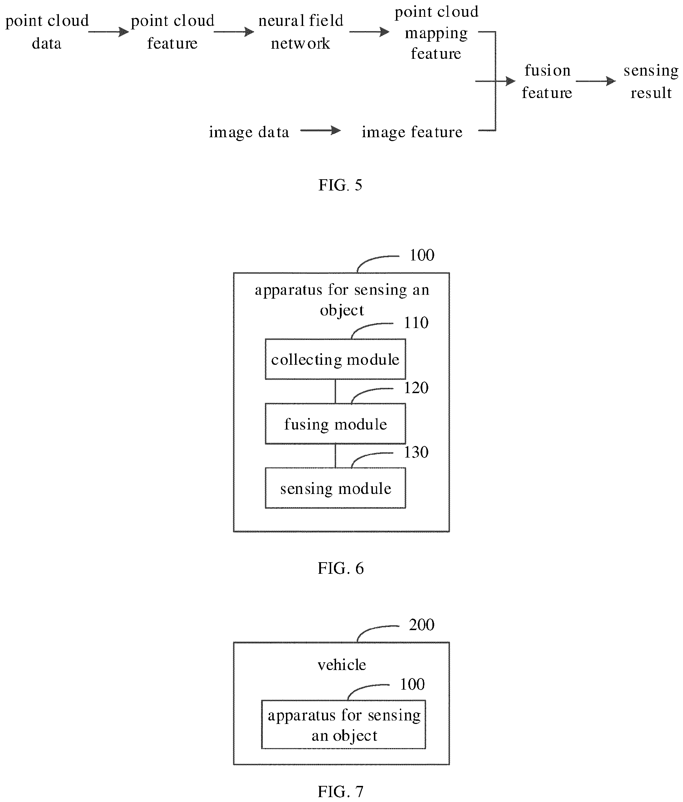

In accordance with embodiments, as shown in FIG. 5, image data and point cloud data of an object are collected, an image feature(s) of the image data and a point cloud feature(s) of the point cloud data are acquired, the point cloud feature(s) is input into a neural field network, a point cloud mapping feature(s) is output from the neural field network, a fusion feature(s) is generated by fusing the point cloud mapping feature(s) and the image feature(s), and a sensing result of the object is generated according to the fusion feature(s).

FIG. 6 is a block diagram illustrating an apparatus for sensing an object according to an embodiment of the present invention. As shown in FIG. 6, the apparatus 100 for sensing the object of the present invention includes a collecting module 110, a fusing module 120 and a sensing module 130. The collecting module 110 is configured to collect image data and point cloud data of the object and acquire an image feature of the image data and a point cloud feature of the point cloud data. The fusing module 120 is configured to generate a fusion feature by performing feature fusion on the image feature and the point cloud feature. The sensing module 130 is configured to generate a sensing result of the object according to the fusion feature.

In an embodiment, the fusing module 120 is further configured to: generate a point cloud mapping feature of the point cloud feature in a feature space where the image feature is present by performing feature mapping on the point cloud feature; and generate the fusion feature by performing the feature fusion on the image feature and the point cloud mapping feature.

In an embodiment, the fusing module 120 is further configured to: generate an image mapping feature of the image feature in a feature space where the point cloud feature is present by performing feature mapping on the image feature; and generate the fusion feature by performing the feature fusion on the image mapping feature and the point cloud feature.

In an embodiment, the fusing module 120 is further configured to: acquire a neural field network corresponding to one of the point cloud feature and the image feature; and input the one of the point cloud feature and the image feature into the neural field network, and output the mapping feature by the neural field network.

In an embodiment, the fusing module 120 is further configured to: acquire a sampling point set corresponding to one of the point cloud feature and the image feature, and divide the sampling point set into a plurality of sampling point subsets; perform the feature mapping on the one of the point cloud feature and the image feature corresponding to each sampling point in the plurality of sampling point subsets, and generate a local mapping feature corresponding to each sampling point subset; and generate a global mapping feature corresponding to the sampling point set by performing feature aggregation on the local mapping features corresponding to the plurality of the sampling point subsets.

In an embodiment, the fusing module 120 is further configured to: determine a plurality of center points from the sampling points in the sampling point set; acquire a region formed by taking one of the plurality of center points as a center of the region and spreading out from the center of the region; and construct one sampling point subset based on all sampling points in a respective region.

In an embodiment, the fusing module 120 is further configured to: generate a sampling point pair by pairing the first sampling point and the second sampling point based on a position of a first sampling point corresponding to the image feature and a position of a second sampling point corresponding to the point cloud feature, in which the sampling point pair includes a first target sampling point and a second target sampling point; and generate the fusion feature by performing the feature fusion on the image feature corresponding to the first target sampling point and the point cloud feature corresponding to the second target sampling point.

In an embodiment, the fusing module 120 is further configured to: acquire, based on a position of a first candidate sampling point, a first transformation position of the first candidate sampling point in a coordinate system where the second sampling point is present; select, based on positions of second sampling points and the first transformation position, a second candidate sampling point from the second sampling points, in which a position of the second candidate sampling point is the same as the first transformation position; and generate the sampling point pair by pairing the first candidate sampling point and the second candidate sampling point.

In an embodiment, the fusing module 120 is further configured to: acquire, based on a position of a second candidate sampling point, a second transformation position of the second candidate sampling point in a coordinate system where the first sampling point is present; select, based on positions of first sampling points and the second transformation position, a first candidate sampling point from the first sampling points, in which a position of the first candidate sampling point is the same as the second transformation position; and generate the sampling point pair by pairing the first candidate sampling point and the second candidate sampling point.

In the apparatus in the above-mentioned embodiments, the specific manner in which each module performs operations has been described in detail in accordance with embodiments of the method of the present invention, and will not be elaborated here.

With the apparatus for sensing the object of the present invention, the fusion feature is generated by fusing the image feature with the point cloud feature, and the sensing result of the object can be generated according to the fusion feature. Therefore, the generation of the sensing result of the object is based on the fusion feature obtained through the feature fusion of the image feature and the point cloud feature, and in this way the object is sensed by the comprehensive consideration of both the image feature and the point cloud feature, thus improving the robustness and the accuracy of the object sensing.

As shown in FIG. 7, the present invention further provides a vehicle 200 including the apparatus 100 for sensing the object as described above.

With the vehicle of the present invention, the fusion feature is generated by fusing the image feature with the point cloud feature, and the sensing result of the object can be generated according to the fusion feature. Therefore, the generation of the sensing result of the object is based on the fusion feature obtained through the feature fusion of the image feature and the point cloud feature, and in this way the object is sensed by the comprehensive consideration of both the image feature and the point cloud feature, thus improving the robustness and the accuracy of the object sensing.

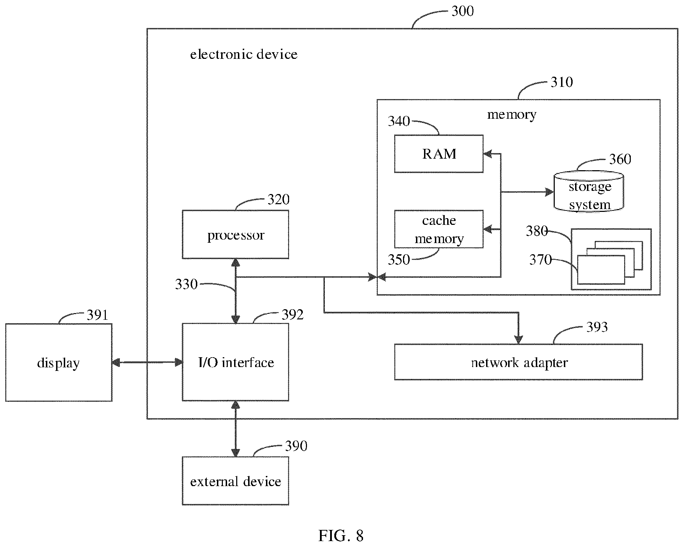

FIG. 8 is a block diagram illustrating an electronic device 300 according to an embodiment of the present invention.

As shown in FIG. 8, the electronic device 300 include: a memory 310, a processor 320 and a bus 330 connecting different components including the memory 310 and the processor 320. The memory has a computer program stored therein, and processor 320 is configured to implement operations of the method for sensing the object of accordance with embodiments of the present invention when the program is executed by the processor 320.

The bus 330 represents one or more of several types of bus architectures, and includes a memory bus or a memory controller, a peripheral bus, a graphics acceleration port, a processor, or a local bus that uses any of a variety of bus architectures. For example, these architectures include, but are not limited to, an industry standard architecture (ISA) bus, a micro channel architecture (MAC) bus, an enhanced ISA bus, a video electronics standard association (VESA) local bus and a peripheral component interconnection (PCI) bus.

The electronic device 300 may typically include a variety of electronic device readable media. These media may be any available media that may be accessed by the electronic device 300 and include volatile media, non-volatile media, removable media and non-removable media.

The memory 310 may include a computer system readable medium in a form of a volatile memory, such as a random access memory (RAM) 340 and/or a cache memory 350. The electronic device 300 may further include other removable/non-removable, volatile/non-volatile computer system storage media. By way of example only, a storage system 360 may be configured to read and write non-removable, non-volatile magnetic media (not shown in FIG. 8, commonly referred to as a "hard disk drive"). Although not shown in FIG. 8, a disk drive for reading and writing a removable non-volatile magnetic disk (for example, a "floppy disk") and a compact disc for reading and writing a removable non-volatile optical disk (for example, a compact disc read only memory (CD-ROM), a digital video disc read only memory (DVD-ROM) or other optical media). In these cases, each drive may be connected with the bus 330 via one or more data medium interfaces. The memory 310 may include at least one program product having a set of (e.g., at least one) program modules configured to perform the functions in various embodiments of the present invention.

A program/utility 380 having a set of (at least one) program modules 370 may be stored in, for example, the memory 310. Such program module 370 includes, but is not limited to, an operating system, one or more application programs, other program modules, and program data, one or more combination in these embodiments may include an implementation of a network environment. The program module 370 generally performs the functions and/or methods in accordance with embodiments described in the present invention.

The electronic device 300 may also communicate with one or more external devices 390 (e.g., a keyboard, a pointing device, a display 391, etc.) and may also communicate with one or more devices that enable a user to interact with the electronic device 300 and/or communicate with any device (e.g., a network card, a modem, etc.) that enables the electronic device 300 to communicate with one or more other computer devices. This communication may be performed via an input/output (I/O) interface 392. Moreover, the electronic device 300 may communicate with one or more networks such as a local area network (LAN), a wide area network (WAN) and/or a public network, e.g., Internet, through a network adapter 393. As shown in FIG. 8, the network adapter 393 communicates with other modules of the electronic device 300 via the bus 330. It should be understood that although not shown in figures, the electronic device 300 may be used in combination of other hardware and/or software modules including, but being not limited to, a microcode, a device driver, a redundant processing units, an external disk drive array, a RAID system, a tape drive and a data backup storage system.

The processor 320 executes various functional applications as well as data processing (for example, realizing the methods mentioned in the preceding embodiments) by operating a program stored in the memory 310.

It should be noted that, regarding details of the implementation process and the technical principle of the electronic device in accordance with embodiments, reference is made to the above embodiments of the methods for sensing the object of the present invention, and thus details will not be elaborated here.

The electronic device provided by accordance with embodiments of the present invention may perform the method for sensing the object as described above. The fusion feature is generated by fusing the image feature with the point cloud feature, and the result of the sensed object can be generated according to the fusion feature. Therefore, the generation of the sensing result of the object is based on the fusion feature obtained through the feature fusion of the image feature and the point cloud feature, and in this way the object is sensed by the comprehensive consideration of both the image feature and the point cloud feature, thus improving the robustness and the accuracy of the object sensing.

The present invention further provides a computer-readable storage medium having an instruction stored therein, wherein when the instruction is executed by an electronic device, the electronic device implements the method for sensing the object as described above.

Optionally, the computer-readable medium may be a read-only memory (ROM), a random access memory (RAM), CD-ROM, a magnetic tape, a floppy disk, an optical data storage device, etc.

The present invention further provides a computer program product including a computer program. When the computer program is operated by a processor of an electronic device, the processor of the electronic device implements the method for sensing the object as described above.

Other embodiments of the present invention will be apparent to those skilled in the art from consideration of the specification and practice of the present invention disclosed herein. The present invention is intended to cover any variations, uses, or adaptive modifications of the present invention following the general principles thereof and including common general knowledge or conventional techniques in the art not disclosed by this disclosure. It is intended that the specification and examples be considered as exemplary only, with a true scope and spirit of the present invention being indicated by the appended claims.

## Claims

1. A method for sensing an object, comprising:
collecting (S101) image data and point cloud data of the object, and acquiring an image feature of the image data and a point cloud feature of the point cloud data;
generating (S102) a fusion feature by performing feature fusion on the image feature and the point cloud feature; and
generating (S103) a sensing result of the object according to the fusion feature.

2. The method according to claim 1, wherein generating (S102) the fusion feature by performing the feature fusion on the image feature and the point cloud feature comprises:
generating a point cloud mapping feature of the point cloud feature in a feature space where the image feature is present by performing feature mapping on the point cloud feature; and
generating the fusion feature by performing the feature fusion on the image feature and the point cloud mapping feature.

3. The method according to claim 1, wherein generating (S102) the fusion feature by performing the feature fusion on the image feature and the point cloud feature comprises:
generating an image mapping feature of the image feature in a feature space where the point cloud feature is present by performing feature mapping on the image feature; and
generating the fusion feature by performing the feature fusion on the image mapping feature and the point cloud feature.

4. The method according to claim 2 or 3, wherein a mapping feature selected from the point cloud mapping feature and the image mapping feature is generated by:
acquiring (S201) a neural field network corresponding to one of the point cloud feature and the image feature; and
inputting (S202) the one of the point cloud feature and the image feature into the neural field network, and outputting the mapping feature by the neural field network.

5. The method according to claim 2 or 3, wherein a mapping feature selected from the point cloud mapping feature and the image mapping feature is generated by:
acquiring (S301) a sampling point set corresponding to one of the point cloud feature and the image feature, and dividing the sampling point set into a plurality of sampling point subsets;
performing (S302) the feature mapping on the one of the point cloud feature and the image feature corresponding to each sampling point in the plurality of sampling point subsets, and generating a local mapping feature corresponding to each sampling point subset; and
generating (S303) a global mapping feature corresponding to the sampling point set by performing feature aggregation on the local mapping features corresponding to the plurality of the sampling point subsets.

6. The method according to claim 5, wherein dividing the sampling point set into the plurality of the sampling point subsets comprises:
determining a plurality of center points from the sampling points in the sampling point set;
acquiring a region formed by taking one of the plurality of center points as a center of the region and spreading out from the center of the region; and
constructing one sampling point subset based on all sampling points in a respective region.

7. The method according to any one of claims 1 to 6, wherein generating (S102) the fusion feature by performing the feature fusion on the image feature and the point cloud feature comprises:
generating (S401) a sampling point pair by pairing the first sampling point and the second sampling point based on a position of a first sampling point corresponding to the image feature and a position of a second sampling point corresponding to the point cloud feature, wherein the sampling point pair comprises a first target sampling point and a second target sampling point; and
generating (S402) the fusion feature by performing the feature fusion on the image feature corresponding to the first target sampling point and the point cloud feature corresponding to the second target sampling point.

8. The method according to claim 7, wherein generating (S401) the sampling point pair by pairing the first sampling point and the second sampling point based on the position of the first sampling point corresponding to the image feature and the position of the second sampling point corresponding to the point cloud feature comprises:
acquiring, based on a position of a first candidate sampling point, a first transformation position of the first candidate sampling point in a coordinate system where the second sampling point is present;
selecting, based on positions of second sampling points and the first transformation position, a second candidate sampling point from the second sampling points, wherein a position of the second candidate sampling point is the same as the first transformation position; and
generating the sampling point pair by pairing the first candidate sampling point and the second candidate sampling point.

9. The method according to claim 7, wherein generating (S401) the sampling point pair by pairing the first sampling point and the second sampling point based on the position of the first sampling point corresponding to the image feature and the position of the second sampling point corresponding to the point cloud feature comprises:
acquiring, based on a position of a second candidate sampling point, a second transformation position of the second candidate sampling point in a coordinate system where the first sampling point is present;
selecting, based on positions of first sampling points and the second transformation position, a first candidate sampling point from the first sampling points, wherein a position of the first candidate sampling point is the same as the second transformation position; and
generating the sampling point pair by pairing the first candidate sampling point and the second candidate sampling point.

10. An apparatus (100) for sensing an object, comprising:
a collecting module (110) configured to collect image data and point cloud data of the object and acquire an image feature of the image data and a point cloud feature of the point cloud data;
a fusing module (120) configured to generate a fusion feature by performing feature fusion on the image feature and the point cloud feature; and
a sensing module (130) configured to generate a sensing result of the object according to the fusion feature.

11. The apparatus (100) according to claim 10, wherein the fusing module (120) is further configured to execute the steps of any one of claims 2-9.

12. A vehicle (200), comprising the apparatus (100) for sensing the object according to claim 10 or 11.

13. An electronic device (300), comprising:
a processor (320); and
a memory (310) having stored therein instructions executable by the processor;
wherein the processor (320) is configured to execute the instructions for implementing the method for sensing the object according to any one of claims 1 to 9.

14. A computer-readable storage medium having stored therein instructions that, when executed by a processor of an electronic device, cause the electronic device to implement the method for sensing the object according to any one of claims 1 to 9.

15. A computer program product comprising a computer program that, when operated by a processor of an electronic device, causes the processor of the electronic device to implement the method for sensing the object according to any one of claims 1 to 9.
